# EUROPEAN PATENT APPLICATION

(11) **EP 4 219 034 A1**
(43) Date of publication of application: **02.08.2023**
(21) Application number: 21889198.4
(22) Date of filing: 02.11.2021
(51) Int. Cl.: B09B 3/20, B03D 1/02, A61F 13/15, B01J 20/24, B01J 20/26, B09B 3/00

(54) **SEPARATION METHOD**

(30) Priority: 04.11.2020 JP 2020184207
(71) Applicant: Unicharm Corporation, Shikokuchuo-shi, Ehime 799-0111 (JP)
(72) Inventor: KADOWAKI Haruna, Tokyo 135-8710 (JP); NAKAMURA Shiko, Tokyo 135-8710 (JP); KONISHI Takayoshi, Kanonji-shi, Kagawa 769-1602 (JP); HIRAOKA Toshio, Kanonji-shi, Kagawa 769-1602 (JP)
(74) Representative: Dolleymores
(86) International application number: PCT/JP2021/040408
(87) International publication number: WO 2022/097645

(57) **Abstract**

Provided is a separation method including a supply step (S2) for supplying bubbles including at least one of nanobubbles or microbubbles to a mixture including an absorbent polymer and pulp. The separation method includes a recovery step (S5) for recovering the absorbent polymer, which is separated in the mixed liquid including the absorbent polymer and the pulp by the absorbent polymer, to which the bubbles have adhered, floating upward and the pulp settling in the mixed liquid. In the separation method, the absorbent polymer and the pulp are separated.

## Description

### TECHNICAL FIELD

The present disclosure relates to a separation method.

### BACKGROUND ART

In recent years, attempts have been made to recycle sanitary products, such as used diapers. By recycling sanitary products instead of burning them, resources can be effectively utilized and the amount of carbon dioxide generated in burning can be reduced. Common diapers include an absorbent polymer and pulp, and it is desirable to separate and recover them to improve recycling efficiency.

As a technique for recycling sanitary products, Patent Literature 1 describes a method for producing recycled fibers by removing an absorbent polymer from fibers containing the absorbent polymer. The method includes a step for supplying a mixed liquid that includes water and fibers including an absorbent polymer into a treatment tank containing a treatment solution capable of dissolving the absorbent polymer, while discharging outside the treatment tank the treatment solution including fibers from which the absorbent polymer has been dissolved and removed.

### CITATION LIST

### PATENT LITERATURE

Patent Literature 1: WO 2019/003657

### SUMMARY OF THE INVENTION

In Patent Literature 1, recycled fibers can be efficiently produced by dissolving and removing an absorbent polymer from fibers including the absorbent polymer. However, it is preferable from the viewpoint of recycling to separate and recover not only fibers but also the absorbent polymer.

An object of the present disclosure is to provide a separation method that enables an absorbent polymer to be recovered from a mixture including an absorbent polymer and pulp.

### SOLUTION TO PROBLEM

A separation method according to the present disclosure includes a supply step for supplying bubbles including at least one of nanobubbles or microbubbles to a mixture including an absorbent polymer and pulp. The separation method includes a recovery step for recovering the absorbent polymer, which is separated in the mixed liquid including the absorbent polymer and the pulp by the absorbent polymer, to which the bubbles have adhered, floating upward and the pulp settling in the mixed liquid. In the separation method, the absorbent polymer and the pulp are separated.

The absorbent polymer may float upward in the mixed liquid while maintaining a solid state. The absorbent polymer may include a polyacrylate-based absorbent polymer. The bubbles may have an average bubble diameter of 1 nm to 100 µm. The bubbles may include at least one type of gas selected from the group consisting of hydrogen, nitrogen, oxygen, carbon dioxide, air, and a noble gas. The separation method may further include a settling step of causing the pulp in the mixed liquid to settle between the supply step and the recovery step. The separation method may further include a stirring step of stirring the mixed liquid between the supply step and the settling step.

A separation method according to the present disclosure includes a supply step for supplying charged bubbles to a mixture including absorbent polymer and pulp. The separation method includes a recovery step for recovering the absorbent polymer, which is separated in the mixed liquid including the absorbent polymer and the pulp by the absorbent polymer, to which the bubbles have adhered, floating upward and the pulp settling in the mixed liquid. In the separation method, the absorbent polymer and the pulp are separated.

The present disclosure makes it possible to provide a separation method that enables an absorbent polymer to be separated from a mixture including the absorbent polymer and pulp.

### BRIEF DESCRIPTION OF DRAWINGS

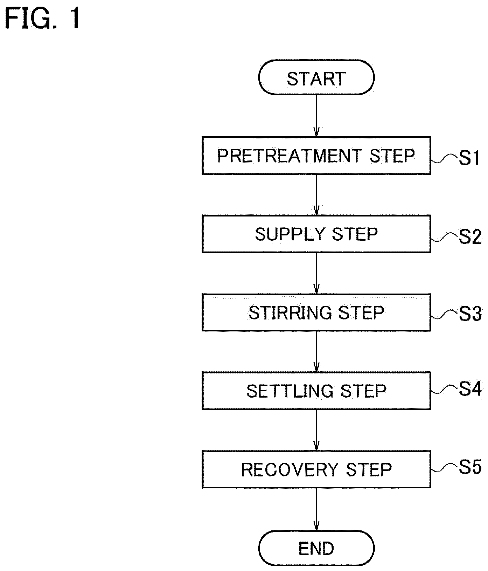

[FIG. 1] FIG. 1 is a flow chart illustrating the flow of a separation method according to the present embodiment.

### DESCRIPTION OF EMBODIMENTS

An exemplary embodiment is described below with reference to the drawings. Note that dimensional ratios in the drawings are exaggerated for convenience of the explanation and may differ from the actual ratios.

A separation method according to the present embodiment is a method of separating an absorbent polymer and pulp. The separation method is a method of separating an absorbent polymer and pulp, for example, from an absorbent article including the absorbent polymer and the pulp. Examples of such an absorbent article includes disposable diapers, urine pads, sanitary napkins, bedsheets, and pet sheets. The absorbent article includes, for example, a permeable top sheet, a waterproof back sheet, and an absorbent material arranged between the top sheet and the back sheet. The absorbent material includes an absorbent polymer and pulp and is capable of absorbing water passing through the top sheet.

The separation method includes a supply step S2 and a recovery step S5, as illustrated in Fig. 1. The separation method may further include a pretreatment step S1, a stirring step S3, and a settling step S4.

### (Pretreatment step S1)

The pretreatment step S1 is performed before the supply step S2. In the pretreatment step S1, an absorbent article is processed in such a manner that an absorbent polymer and pulp can be easily separated in a later step. In the pretreatment step S1, an absorbent material and materials other than the absorbent material are separated through at least one of a mechanical treatment or a chemical treatment, and the separated absorbent material is recovered. Examples of the mechanical treatment include grinding and pressurization. Examples of the chemical treatment include a chemical agent treatment in which a chemical agent is added to dissolve an adhesive, for example. A residue, which is a material other than the absorbent material and could not be separated, may adhere to the absorbent material including the absorbent polymer and pulp, obtained in the pretreatment step S1.

### (Supply step S2)

In the supply step S2, bubbles are supplied to a mixture including the absorbent polymer and pulp. The method of supplying bubbles is not limited; for example, a bubble liquid having bubbles dispersed in a liquid may be prepared, and the bubble liquid may be added to a container containing the mixture including the absorbent polymer and pulp. Bubbles may also be generated in a mixed liquid including an absorbent polymer, pulp, and a liquid.

The absorbent polymer is, for example, a hydrogel that has a three-dimensional network structure formed through cross-linking and is capable of absorbing water in the mixed liquid. The absorbent polymer may be at least one polymer selected from the group consisting of a polyacrylate-based polymer, a polysulfonate-based polymer, a maleic anhydride salt-based polymer, a polyaspartate-based polymer, a polyglutamate-based polymer, and a polyalginate-based polymer.

The absorbent polymer preferably includes a polyacrylate-based absorbent polymer. This is because polyacrylate-based absorbent polymers are commonly and widely used and can be widely used for recycling technologies. The polyacrylate-based absorbent polymer is an absorbent polymer including at least one polyacrylate structure selected from the group consisting of sodium polyacrylate, potassium polyacrylate, calcium polyacrylate, and magnesium polyacrylate. The shape and size of the absorbent polymer are not limited, and an absorbent polymer having a desired shape and a desired size can be used.

The pulp is, for example, an aggregate of cellulose fibers. The pulp includes at least one pulp selected from the group consisting of wood pulp made from wood, non-wood pulp made from plants other than wood, and recycled pulp made from waste paper and the like. The pulp can be produced through a mechanical treatment, a chemical treatment, or a combination thereof. The shape and size of the pulp are not limited, and pulp having a desired shape and a desired size can be used.

The bubbles include at least one of nanobubbles or microbubbles. Such bubbles easily adhere to an absorbent polymer and can cause the absorbent polymer to float upward. The smaller the diameter of such bubbles, the less buoyancy they have, the easier they are to be retained in water, and the less likely they are to disappear as they float upward to the surface of the water. However, in the present embodiment, the bubbles are not limited to bubbles including at least one of microbubbles or nanobubbles, and charged bubbles may be used.

The average bubble diameter of the bubbles is 1 nm to 100 µm, for example. By setting the average bubble diameter of the bubbles to such a range, it is possible to cause the bubbles to adhere to the absorbent polymer and to make it easy for the absorbent polymer to float upward. The average bubble diameter of the bubbles may be smaller than the diameter of pieces of the absorbent polymer after swelling. The average bubble diameter of the bubbles is, for example, the average of the diameters of about 100 bubbles measured through an image analysis.

Gas included in the bubbles is not limited as long as it is possible to cause the absorbent polymer to float upward in the mixed liquid. An inert gas that does not decompose the absorbent polymer can be used, and examples thereof include hydrogen, nitrogen, oxygen, carbon monoxide, carbon dioxide, air, a noble gas, a hydrocarbon such as methane, and a nitrogen oxide such as nitrogen monoxide. Among these, the bubbles preferably include at least one type of gas selected from the group consisting of hydrogen, nitrogen, oxygen, carbon dioxide, air, and a noble gas. Examples of the noble gas include helium and argon. The above-described types of gas are readily available and are suitable for recycling of an absorbent polymer because they are less active and less likely to damage the absorbent polymer.

The method of generating bubbles is not limited, and known methods can be used, such as the swirling fluid flow method, static mixer method, ejector method, cavitation method, Venturi method, pressure melting method, pore method, rotary method, ultrasonic method, vapor condensation method, and electrolysis method. Bubbles may be generated directly in a mixed liquid including an absorbent polymer and pulp, or, after producing a bubble liquid including bubbles by generating bubbles in a liquid including no absorbent polymer and pulp, the bubble liquid may be added to a mixture including an absorbent polymer and pulp.

### (Recovery step S5)

In a recovery step S5, in the mixed liquid including an absorbent polymer and pulp, the absorbent polymer to which bubbles have adhered floats upward and the pulp settles, and the absorbent polymer separated in the mixed liquid is recovered. Note that an example in which the mixed liquid includes an absorbent polymer, pulp, and water will be described, but the present embodiment is not limited to such a form. Since a general absorbent polymer and general pulp have a greater relative density than that of water and settle in water even after they absorb water and swell, it is not easy to separate the absorbent polymer and the pulp using the difference in specific gravities. However, bubbles including at least one of microbubbles or nanobubbles selectively adhere more to an absorbent polymer than to pulp. The absorbent polymer floats upward in the mixed liquid because the apparent relative density becomes less than the relative density of water due to the adhesion of bubbles. In contrast, since bubbles are less likely to adhere to pulp than to an absorbent polymer, pulp, which has a relative density greater than that of water, settles in the mixed liquid. The absorbent polymer floats upward in the mixed liquid and the pulp settles in the mixed liquid as described above, and thus the absorbent polymer and the pulp are separated.

The relative density of a polyacrylate-based absorbent polymer is greater than that of the liquid in the mixed liquid as described above, and one example of the relative density of sodium polyacrylate is about 1.2 g/cm³. The relative density of the pulp is also greater than that of the liquid in the mixed liquid as described above, and one example of the relative density of cellulose is about 1.5 g/cm³. In the present embodiment, since the liquid in the mixed liquid is water, the density is about 1 g/cm³, but the liquid in the mixed liquid may be a liquid other than water. An example of the liquid other than water is not limited as long as the absorbent polymer floats upward due to the adhesion of bubbles and the pulp settles, but it may be a liquid including an organic substance, such as an alcohol.

The absorbent polymer floats upward in the mixed liquid while maintaining its solid state. This makes it easy to recover the absorbent polymer from the container containing the mixed liquid. The recovered absorbent polymer can be recycled through a cleaning process and the like. Note that "solid" here also includes gel. "Floats upward in the mixed liquid while maintaining its solid state" means that the absorbent polymer floats upward in the mixed liquid without being dissolved through reducing its molecular weight using an oxidizing agent, such as ozone. Thus, it is preferable that bubbles include gas having less ability to decompose the absorbent polymer than that of ozone.

The pH of the mixed liquid is not limited as long as the absorbent polymer and the pulp can be separated. From the viewpoint of increasing the recovery rate of the absorbent polymer, the pH of the mixed liquid is preferably set to 2.5 to 11. The pH of the mixed liquid may be 6 or higher. The pH of the mixed liquid may be 8 or lower. The pH of the mixed liquid can be adjusted by adding a citric acid, sodium hydroxide, or the like to the above-described liquid.

As described above, in the present embodiment, it is easy to recover an absorbent polymer from a container containing a mixed liquid as the absorbent polymer floats upward in the mixed liquid. The method of recovering the absorbent polymer is not limited, and for example, the absorbent polymer may be recovered by tilting the container containing the mixed liquid and taking out the absorbent polymer floating on the liquid surface of the mixed liquid. The absorbent polymer may be recovered from the container also by scooping out the absorbent polymer floating on the liquid surface of the mixed liquid.

In the recovery step S5, not only the absorbent polymer but also the settled pulp may be recovered. The method of recovering pulp is not limited, and for example, pulp may be recovered by sucking out the pulp from the bottom of a container containing a mixed liquid. Pulp and liquid above the settled pulp may be removed from the container, and the pulp remaining at the bottom of the container may be recovered. An oxidizing agent, such as ozone, may be added to the recovered pulp to decompose and remove a minute amount of the absorbent polymer adhering to the pulp.

### (Settling step S4)

The pulp in the mixed liquid is made to settle in the settling step S4 between the supply step S2 and the recovery step S5. The relative density of pulp is greater than that of water, and bubbles that can cause pulp to float upward are unlikely to adhere to the surface of pulp. Thus, the pulp tends to settle in the mixed liquid. The method of settling pulp is not limited, and pulp can be made to settle using a known method. As described above, since the relative density of pulp is greater than that of water, pulp can be made to settle by stopping the generation of bubbles to create a state of rest, for example.

### (Stirring step S3)

The mixed liquid is stirred in the stirring step S3 between the supply step S2 and the settling step S4. By stirring the mixed liquid in the presence of bubbles, bubbles adhere to the absorbent polymer while entanglement between the absorbent polymer and pulp is loosened. It is also possible to move pulp that is in the floating path of the absorbent polymer and is inhibiting the absorbent polymer from floating upward. This makes it easy for the absorbent polymer to float upward and for the pulp to settle, and thus it is possible to facilitate the separation of the absorbent polymer and the pulp. The method of stirring the mixed liquid is not limited, and it can be stirred through a known method. The mixed liquid may be stirred using, for example, a stirrer, a glass rod, or the like. The mixed liquid may be stirred also by shaking a container containing the mixed liquid, for example.

As described above, a separation method according to the present embodiment includes the supply step S2 in which bubbles including at least one of nanobubbles or microbubbles are supplied to a mixture including an absorbent polymer and pulp. The separation method includes the recovery step S5 in which, in the mixed liquid including the absorbent polymer and pulp, the absorbent polymer to which bubbles have adhered floats upward and the pulp settles, and thus the separated absorbent polymer in the mixed liquid is recovered. In the separation method, the absorbent polymer and the pulp are separated.

A separation method according to the present embodiment includes a supply step S2 in which charged bubbles are supplied to a mixture including an absorbent polymer and pulp. The separation method includes the recovery step S5 in which, in the mixed liquid including the absorbent polymer and pulp, the absorbent polymer to which bubbles have adhered floats upward and the pulp settles, and thus the separated absorbent polymer in the mixed liquid is recovered. In the separation method, the absorbent polymer is separated from the pulp.

Therefore, in the separation method according to the present embodiment, it is possible to recover an absorbent polymer from a mixture including the absorbent polymer and pulp.

### EXAMPLES

The present embodiment will be described below in more detail with reference to examples and reference examples, but the present embodiment is not limited to these examples.

### [Example 1]

### (Preparation of bubble water)

First, bubble water was prepared. Specifically, at first, 1 L of ion exchanged water was put in a pressure container (Unicontrols, TA90N). Next, nitrogen was pumped from a gas cylinder into the pressure container at 0.2 MPa, and the container was shaken manually. The nitrogen inlet pipe was closed, and bubble water including at least one of nanobubbles or microbubbles was poured from the pressure container into an empty beaker.

### (Separation test)

Next, a separation test was performed. Specifically, at first, 10 mL of ion exchanged water was added to 30 mg (0.3 mass%) of an absorbent polymer made from sodium polyacrylate and 70 mg (0.7 mass%) of pulp made from cellulose, and stirring was performed for 1 minute to cause the absorbent polymer and the pulp to swell. Next, 200 mL of the bubble water obtained as described above was added to the swelled absorbent polymer and pulp.

A mixed liquid including the absorbent polymer, the pulp, and the bubble water was stirred with a medicine spoon 10 times and allowed to stand for about 3 minutes. Then, after gently shaking the beaker manually, the upper layer and the lower layer were collected by tilting the beaker, liquid collected from each layer was suction-filtered, and the obtained collected material was air-dried and weighed. Then, the recovery rate of each layer was calculated by dividing the mass of the dried upper layer by the mass of the first added absorbent polymer (30 mg) and dividing the mass of the dried lower layer by the mass of the first added pulp (70 mg). The results are shown in Table 1.

### [Example 2]

In the separation test, after the absorbent polymer and pulp were swelled with ion exchanged water, 100 mg of a citric acid was added in such a manner that the concentration of the citric acid was about 1 mass%, and stirring was performed for 30 seconds. Other than this, the recovery rate of each layer was calculated as in example 1.

### [Example 3]

### (Preparation of bubble water)

First, bubble water was prepared. Specifically, at first, 300 mL of a NaOH aqueous solution of pH 13.5 was put in a pressure container (Unicontrols, TA90N). Next, nitrogen was pumped from a gas cylinder into the pressure container at 0.2 MPa, and the container was shaken manually. The nitrogen inlet pipe was closed, and bubble water including at least one of nanobubbles or microbubbles was poured from the pressure container into an empty beaker.

### (Separation test)

Next, a separation test was performed. Specifically, at first, 10 mL of ion exchanged water was added to 30 mg (0.3 mass%) of an absorbent polymer and 70 mg (0.7 mass%) of pulp, and stirring was performed for 1 minute to cause the absorbent polymer and the pulp to swell. Next, 300 mL of the bubble water obtained as described above was added to the mixed liquid. Other than this, the recovery rate of each layer was calculated as in example 1.

### [Example 4]

### (Preparation of bubble water)

First, 1.5 L of ion exchanged water was put in a beaker. Next, using a microbubble generator (AURA TEC:OM4-MDG-045), bubble water including at least one of nanobubbles or microbubbles was prepared by performing bubbling with air until the water in the beaker turned white and bubbles appeared on the liquid surface. Note that the average bubble diameter of the bubbles is about 1 µm when the cumulative value of the particle size distribution on a number basis is 50%, as measured using a laser diffraction and scattering method.

### (Separation test)

Next, a separation test was performed. Specifically, at first, 20 mL of ion exchanged water was added to 60 mg (0.3 mass%) of an absorbent polymer and 140 mg (0.7 mass%) of pulp, and stirring was performed for 1 minute to cause the absorbent polymer and the pulp to swell. Next, 150 mL of the bubble water obtained as described above was added to the swelled absorbent polymer and pulp. Other than this, the recovery rate of each layer was calculated as in example 1.

### [Example 5]

In the separation test, after the absorbent polymer and pulp were swelled with ion exchanged water, 200 mg of a citric acid was added in such a manner that the concentration of the citric acid was about 1 mass%, and stirring was performed for 30 seconds. Other than this, the recovery rate of each layer was calculated as in example 4.

### [Example 6]

First, 1 L of ion exchanged water was put in a beaker. Next, using a microbubble generator (AURA TEC:OM4-MDG-045), bubble water including at least one of nanobubbles or microbubbles was prepared by performing bubbling until the water in the beaker turned white and bubbles appeared on the liquid surface. Note that the average bubble diameter of bubbles is about 1 µm when the cumulative value of the particle size distribution on a number basis is 50%, as measured using a laser diffraction and scattering method. Next, 200 mL of the above-described bubble water was added to a beaker containing 100 mL of a 1.78 g/L NaOH aqueous solution to prepare bubble water of a NaOH aqueous solution of pH 12.3.

Next, a separation test was performed. Specifically, at first, 20 mL of ion exchanged water was added to 60 mg (0.3 mass%) of an absorbent polymer and 140 mg (0.7 mass%) of pulp, and stirred was performed for 1 minute to cause the absorbent polymer and the pulp to swell. Next, 300 mL of the bubble water of pH 12.3 obtained as described above was added to the swelled absorbent polymer and pulp. Other than this, the recovery rate of each layer was calculated as in example 4.

### [Example 7]

### (Preparation of bubble water)

First, 1 L of ion exchanged water was put in a beaker. Next, using a microbubble generator (Fresh by Design, PY101CF-E), bubble water including at least one of nanobubbles or microbubbles was prepared by performing bubbling with nitrogen gas in a gas cylinder.

Next, a separation test was performed. Specifically, at first, 20 mL of ion exchanged water was added to 60 mg (0.3 mass%) of an absorbent polymer and 140 mg (0.7 mass%) of pulp, and stirring was performed for 1 minute to cause the absorbent polymer and the pulp to swell. Next, 150 mL of the bubble water obtained as described above was added to the swelled absorbent polymer and pulp. Other than this, the recovery rate of each layer was calculated as in example 1.

### [Example 8]

In the separation test, after the absorbent polymer and pulp were swelled with ion exchanged water, 200 mg of a citric acid was added in such a manner that the concentration of the citric acid was about 1 mass%, and stirring was performed for 30 seconds. Other than this, the recovery rate of each layer was calculated as in example 7.

### [Comparative example 1]

First, 20 mL of ion exchanged water was added to 60 mg (0.3 mass%) of an absorbent polymer and 140 mg (0.7 mass%) of pulp, and stirred for 1 minute to cause the absorbent polymer and pulp to swell. Next, 200 mL of ion exchanged water was further added to the swelled absorbent polymer and pulp, and bubbles having an average bubble diameter of more than 1 mm were generated in the mixed liquid by performing bubbling. Other than this, the recovery rate of each layer was calculated as in example 1.

### [Comparative example 2]

In the separation test, after the absorbent polymer and pulp were swelled with ion exchanged water, 200 mg of a citric acid was added in such a manner that the concentration of the citric acid was about 1 mass%, and stirring was performed for 30 seconds. Other than this, the recovery rate of each layer was calculated as in comparative example 1.

### [Comparative Example 3]

In the separation test, after the absorbent polymer and pulp were swelled with ion exchanged water, 200 mL of the bubble water of pH 12.3 obtained in example 6 was further added to the swelled absorbent polymer and pulp, and bubbles having an average bubble diameter of more than 1 mm were generated in the mixed liquid by performing bubbling. Other than this, the recovery rate of each layer was calculated as in comparative example 1.

**[Table 1]**

| | pH | Recovery rate/% | |
|---|---|---|---|
| | | Upper layer | Lower layer |
| Example 1 | 7 | 65.4 | 95.5 |
| Example 2 | 2.5 | 79.4 | 96.3 |
| Example 3 | 13.6 | 11.7 | 142.2 |
| Example 4 | 7 | 80 | 104.5 |
| Example 5 | 2.5 | 73.8 | 87.2 |
| Example 6 | 12.7 | 18 | 154 |
| Example 7 | 7 | 58.4 | 119.4 |
| Example 8 | 2.5 | 47.3 | 98.1 |
| Comparative Example 1 | 7 | 0 | - |
| Comparative Example 2 | 2.5 | 0 | - |
| Comparative Example 3 | 13.6 | 0 | - |

In examples 1 to 8, bubbles including at least one of microbubbles or nanobubbles were generated using three types of microbubble generators. As a result, in all cases, bubbles selectively adhered to the absorbent polymer, the absorbent polymer floated upward in the mixed liquid, and the pulp settled at the bottom of the beaker due to its own weight, so that the upper layer mainly including the absorbent polymer and the lower layer mainly including the pulp were separated. Since the absorbent polymer was separated from the pulp and floated upward, it was possible to easily recover the absorbent polymer. The density of visible bubbles varied depending on the microbubble generators, and the higher the density of bubbles, the higher the recovery rate of the absorbent polymer. Under any of acidic, neutral, and basic conditions, the mixed liquid was separated into the upper layer and the lower layer, but the recovery rate of the absorbent polymer was higher under acidic and neutral conditions than under basic conditions.

On the other hand, in comparative examples 1 to 3, bubbles having an average bubble diameter of more than 1 mm were generated, but neither of the absorbent polymer and the pulp floated upward in the mixed liquid and both settled to the bottom of the beaker due to their own weight, and thus the absorbent polymer could not be recovered. In comparative examples 1 to 3, it is considered that bubbles having an average bubble diameter of more than 1 mm were unlikely to adhere to both of the absorbent polymer and the pulp.

The reasons why bubbles adhere more to the absorbent polymer than to the pulp are presumed to be as follows. That is, an absorbent polymer, such as a polyacrylate-based absorbent polymer described above, has a high degree of ionization, and an electric double layer is considered to be formed by carboxylate ions (R-COO⁻) and positively charged counter ions formed in the liquid. In contrast, pulp has a lower degree of ionization than an absorbent polymer. Bubbles including at least one of microbubbles or nanobubbles have a negative zeta potential, so it is considered that bubbles adhered to the absorbent polymer in which more counter ions were formed than the pulp, and caused the absorbent polymer to float upward. In contrast, it is considered that the pulp settled due to its own weight because it had less positive charges and the bubbles were less likely to adhere to it. Note that the present embodiment is not limited to the above-described mechanism, but based on the above-described mechanism, it is presumed that the same effect is achieved with charged bubbles and is not limited to bubbles including at least one of microbubbles or nanobubbles.

The entire contents of Japanese Patent Application No. 2020 -184207 (filed on November 4, 2020) are incorporated herein by reference.

Although an embodiment has been described, it is possible to modify or alter the embodiment based on the above disclosure. All the components of the above-described embodiment and all the features described in the claims may be individually extracted and combined as long as they do not contradict each other.

### REFERENCE SIGNS LIST

- S1: Pretreatment step
- S2: Supply step
- S3: Stirring step
- S4: Settling step
- S5: Recovery step

## Claims

1. A separation method of separating an absorbent polymer and pulp, comprising:
a supply step for supplying bubbles including at least one of nanobubbles or microbubbles to a mixture including the absorbent polymer and the pulp; and
a recovery step for recovering the absorbent polymer, which is separated in the mixed liquid including the absorbent polymer and the pulp by the absorbent polymer, to which the bubbles have adhered, floating upward and the pulp settling in the mixed liquid.

2. The separation method according to claim 1, wherein the absorbent polymer floats upward in the mixed liquid while maintaining a solid state.

3. The separation method according to claim 1 or 2, wherein the absorbent polymer includes a polyacrylate-based absorbent polymer.

4. The separation method according to any one of claims 1 to 3, wherein the bubbles have an average bubble diameter of 1 nm to 100 µm.

5. The separation method according to any one of claims 1 to 4, wherein the bubbles include at least one type of gas selected from the group consisting of hydrogen, nitrogen, oxygen, carbon dioxide, air, and a noble gas.

6. The separation method according to any one of claims 1 to 5, further comprising: a settling step of causing the pulp in the mixed liquid to settle between the supply step and the recovery step.

7. The separation method according to claim 6, further comprising: a stirring step of stirring the mixed liquid between the supply step and the settling step.

8. A separation method of separating an absorbent polymer and pulp, comprising:
a supply step for supplying charged bubbles to a mixture including the absorbent polymer and the pulp; and
a recovery step for recovering the absorbent polymer, which is separated in the mixed liquid including the absorbent polymer and the pulp by the absorbent polymer, to which the bubbles have adhered, floating upward and the pulp settling in the mixed liquid.
